(19) Europäisches Patentamt
European Patent Office
Office européen des brevets

(11) **EP 3 241 919 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
*C22C 9/01* (2006.01)          *C22C 9/05* (2006.01)
*C22F 1/08* (2006.01)

(21) Anmeldenummer: **16001011.2**

(22) Anmeldetag: **04.05.2016**

(54) **KUPFER-ALUMINIUM-MANGAN-LEGIERUNG UND DEREN VERWENDUNG**

COPPER ALUMINIUM MANGANESE ALLOY AND ITS USE

ALLIAGE CUIVRE/ALUMINIUM/MANGANESE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.11.2017 Patentblatt 2017/45**

(73) Patentinhaber: **Wieland-Werke AG**
**89079 Ulm (DE)**

(72) Erfinder:
• **Altenberger, Igor**
**89231 Neu-Ulm (DE)**
• **Kuhn, Hans-Achim**
**89257 Illertissen (DE)**

(56) Entgegenhaltungen:
• **WACHTEL E ET AL: "Magnetothermal investigations of Cu-Al-Mn alloys (field of the heusler -phase)", JOURNAL OF MAGNETISM AND MAGNETIC MATERIALS, ELSEVIER SCIENCE PUBLISHERS, AMSTERDAM, NL, Bd. 4, Nr. 1-4, 1. Januar 1977 (1977-01-01), Seiten 292-301, XP024534594, ISSN: 0304-8853, DOI: 10.1016/0304-8853(77)90051-8 [gefunden am 1977-01-01]**
• **S. KOGA ET AL: "Anomalous electrical resistivity and nuclear magnetic resonance in rapidly quenched Cu-Mn-Al ribbons", IEEE TRANSACTIONS ON MAGNETICS., Bd. 23, Nr. 5, 5. September 1987 (1987-09-05), Seiten 3089-3091, XP055309565, NEW YORK, NY, US ISSN: 0018-9464, DOI: 10.1109/TMAG.1987.1065262**
• **NARITA K ET AL: "On the very high coercivity of certain copper-manganese-aluminum alloys", PROCEEDINGS OF THE INTERNATIONAL CONFERENCE OF MAGNETISM / ICM-73, NAUKA, RUSSIA, Bd. 1, Pt. 2, 22. August 1973 (1973-08-22) , Seiten 230-235, XP009192037,**
• **K. NARITA ET AL: "Constricted hysteresis loop and microstructure of Cu-Mn-Al alloys", APPLIED PHYSICS LETTERS, Bd. 31, Nr. 10, 7. September 1977 (1977-09-07), Seite 712, XP055309543, US ISSN: 0003-6951, DOI: 10.1063/1.89490**
• **NARITA KENJI ET AL: "Magnetic properties of copper-manganese-aluminum ribbon formed by rapid quenching method", PROCEEDINGS OF THE FOURTH INTERNATIONAL CONFERENCE ON RAPIDLY QUENCHED METALS, JPN. INST. MET., SENDAI, JP, Bd. 4th, Nr. 1982, 1. Januar 1982 (1982-01-01), Seiten 977-980, XP009192040,**
• **BELETSKAYA S P ET AL: "Structure of high-coercivity copper-manganese-aluminum alloys", FIZIKA METALLOV I METALLOVEDENIE (1990),, Nr. 8, 1. Januar 1990 (1990-01-01), Seiten 128-133, XP009192045, ISSN: 0015-3230**

**Beschreibung**

Die Erfindung betrifft eine Kupfer-Aluminium-Mangan-Legierung sowie deren Verwendung.

Es sind verschiedene Kupfer-Aluminium-Mangan-Legierungen sowie deren Verwendungen bekannt. Beispielsweise ist die Legierung $Cu_2AlMn$ als Heuslersche Legierung bekannt. Die stöchiometrische Zusammensetzung $Cu_2AlMn$ entspricht gewichtsbezogen einer Zusammensetzung von 61 Gew.-% Cu, 26 Gew.-% Mn und 13 Gew.-% Al. Die Legierung weist ferromagnetische Eigenschaften auf, obwohl die darin enthaltenen Atome nicht ferromagnetisch sind. In das Umfeld der Heuslerschen Legierung gehören auch die aus der Druckschrift JP 05009626 A bekannten ferromagnetischen Kupferlegierungen, die bis zu 30 Gew-% Mn und bis zu 15 Gew.-% Al enthalten.

Aus der Offenlegungsschrift DE 10 2005 035 709 A1 sind Kupferlegierungen mit 2 bis 12 Gew.-% Mangan und 5 bis 14 Gew.-% Aluminium bekannt. Diese Legierungen zeichnen sich durch eine hohe Dämpfungskapazität aus. Die Legierungen werden zur Verringerung von Vibrationen und zur Geräuschdämpfung an mechanisch belasteten Bauteilen verwendet.

Des Weiteren sind aus der Druckschrift JP 07062472 A Kupferlegierungen mit 5 bis 20 Gew.-% Mn und 3 bis 10 Gew.-% Al als Formgedächtnislegierungen bekannt. Die mechanischen Eigenschaften dieser Legierungen liegen in einem für Kupferlegierungen typischen Bereich.

In Wachtel E. et al: "Magnetothermal Investigations of Cu-Al-Mn-Alloys (Field of the Heusler-Phase)", Journal of Magnetism and Magnetic Materials, Bd. 4, Nr. 1-4, 01.01.1977, pp. 292 - 301, wird über Untersuchungen an ternären Cu-Al-Mn-Legierungen mit konstantem Verhältnis Cu : Mn = 2 : 1 berichtet. Der Al-Anteil der untersuchten Proben erstreckt sich von 6,25 bis 46,65 at.-%. Nur für Al-Anteile über 50 at.-% wird $\gamma$-Phase beobachtet.

In Koga et al: "Anomalous Electrical Resistivity and Nuclear Magnetic Resonance in Rapidly Quenched Cu-Mn-Al-Ribbons", IEEE Transactions on Magnetics, Bd. 23, Nr. 5, 05.09.1987, pp. 3089-3091, wird über Untersuchungen an ternären Cu-Al-Mn-Legierungen mit einem Al-Anteil von 33 at.-% berichtet. Der Mn-Anteil der Proben beträgt dabei 20 und 35 at.-%.

Der Erfindung liegt die Aufgabe zugrunde, verbesserte Kupfer-Aluminium-Mangan-Legierungen sowie Verwendungen dieser Legierungen anzugeben. Insbesondere sollen diese Legierungen durch eine relativ geringe Dichte, eine hohe Festigkeit, eine sehr hohe Verschleißbeständigkeit und eine für technische Anwendungen akzeptable Duktilität gekennzeichnet sein. Aus den Legierungen sollen mit üblichen Verfahren und im technischen Maßstab Werkstoffe in üblicherweise verwendeten Formaten herstellbar sein.

Die Erfindung wird bezüglich einer Legierung durch die Merkmale des Anspruchs 1 und bezüglich Verwendungen der Legierung durch die Merkmale der Ansprüche 7 bis 10 wiedergegeben. Die weiteren rückbezogenen Ansprüche betreffen vorteilhafte Aus- und Weiterbildungen der Erfindung.

Die Erfindung schließt eine polykristalline Kupfer-Aluminium-Mangan-Legierung mit folgender Zusammensetzung [in Gewichts-%] ein:

| | |
|---|---|
| Al: | 17 bis 25 % |
| Mn: | 17 bis 25 % |

Rest Kupfer sowie unvermeidbare Verunreinigungen, wobei die Summe aus dem Aluminiumanteil und dem Mangananteil mindestens 40,5 Gew.-% beträgt. Als unvermeidbare Verunreinigungen werden dabei Elemente verstanden, deren Anteil in der Legierung einzeln weniger als 0,1 Gew.-%, bevorzugt weniger als 0,05 Gew.-%, besonders bevorzugt weniger als 0,02 Gew.-% beträgt.

Die Erfindung geht dabei von der Überlegung aus, dass durch Zugabe von Aluminium und Mangan in den oben spezifizierten Anteilen zu Kupfer eine Legierung mit speziellen Eigenschaften, insbesondere hinsichtlich Dichte, Festigkeit, Härte, Duktilität und Verschleißbeständigkeit, gebildet wird. Werkstoffe aus derartigen Legierungen weisen je nach genauer Zusammensetzung bei Raumtemperatur eine Dichte von 6000 bis 6200 $kg/m^3$ und je nach Temperaturbehandlung eine Härte von 500 bis 800 HV0,1 auf. Die Härte und folglich auch die Festigkeit eines solchen polykristallinen Werkstoffs liegen damit auf dem Niveau von amorphem, kupferbasiertem metallischem Glas.

Mit steigender Härte nimmt die Duktilität von Werkstoffen in der Regel ab. Die Duktilität von hochfesten und damit relativ spröden Werkstoffen wird zweckmäßigerweise nicht mittels eines Zugversuchs sondern mittels eines Druckversuchs oder mittels einer Martens-Härteprüfung quantifiziert. Dabei wird die Arbeit ermittelt, die am Versuchskörper unter definierter Druckbelastung durch plastische Verformung verrichtet wird. Diese Arbeit, die in der Literatur "plastische Arbeit" genannt wird, korreliert für hochfeste Werkstoffe gut mit der Bruchdehnung und ist somit zur Abschätzung der Duktilität des Werkstoffs geeignet. Werkstoffe aus einer erfindungsgemäßen Legierung weisen in einem großen Härtebereich eine höhere Duktilität als das kupferbasierte metallische Glas $Cu_{47}Ti_{34}Zr_{11}Ni_8$ (Vitreloy 101) gleicher Härte auf. So kann an einem Versuchskörper der Härte 600 HV0,1 bei einer Martens-Härteprüfung mit einer Prüfkraft von 1000 mN eine plastische Arbeit von ungefähr 0,7 µJ ermittelt werden, während bei einer analogen Prüfung an einem metallischen Glas der gleichen Härte lediglich ein Wert von etwas mehr als 0,6 $\mu$J ermittelt wird.

Die aus Druckversuchen ermittelte Stauchgrenze $Rp_{0,2}$ von Werkstoffen aus einer erfindungsgemäßen Legierung beträgt bei Raumtemperatur mehr als 1300 MPa. Im Temperaturbereich zwischen 300 und 550 °C liegt die Elastizitätsgrenze eines solchen Werkstoffs über der Streckgrenze von warmfestem, hochlegiertem austenitischen Stahl X10 CrNiNb 18 9. Bis 650 °C sind die erfindungsgemäßen Legierungen auch der Kupferlegierung CuCrZr bezüglich der Festigkeit überlegen.

Zur Herstellung der erfindungsgemäßen Legierung ist keine aufwändige Vakuumschmelztechnologie wie bei metallischen Gläsern notwendig. Es können Schmelz- und Gießprozesse, die heute bei der Herstellung von Kupferhalbzeugen genutzt werden, in angepasster Form verwendet werden. Dies hat den Vorteil, dass die Legierung in Abmessungen gegossen werden kann, die für die industrielle Herstellung von Halbzeugen, Komponenten und Bauteilen zweckmäßig sind.

Werkstoffe aus erfindungsgemäßen Legierungen lassen sich trotz ihrer Härte mechanisch bearbeiten, beispielsweise durch Drehen, Schleifen oder mechanisches Polieren. Die erfindungsgemäßen Legierungen besitzen ferromagnetische Eigenschaften, die sich durch Wärmebehandlung oder Warmumformung einstellen lassen. Der Ferromagnetismus hat ein Minimum bei einer Umform- oder Glühtemperatur von ungefähr 400 °C.

Bevorzugt kann bei der erfindungsgemäßen Kupfer-Aluminium-Mangan-Legierung der Aluminiumanteil mindestens 18 Gew.-%, besonders bevorzugt mindestens 20,5 Gew.-% betragen. Durch einen hohen Anteil an Aluminium erhält man einen Werkstoff mit besonders günstigen Eigenschaften bezüglich der Kombination aus Festigkeit und Dichte. Der Werkstoff eignet sich besonders als Leichtbauwerkstoff.

Bevorzugt kann bei der erfindungsgemäßen Kupfer-Aluminium-Mangan-Legierung der Mangananteil mindestens 20,5 Gew.-% betragen. Durch den hohen Anteil an Mangan erhält man einen Werkstoff mit besonders günstigen Eigenschaften bezüglich der Kombination aus Festigkeit und Verschleißbeständigkeit.

Eine erfindungsgemäße Kupfer-Aluminium-Mangen-Legierung kann vorteilhafterweise einer Wärmebehandlung unterzogen werden, um Härte und Duktilität des Gusswerkstoffs gezielt einzustellen. Um eine Härte von mindestens 650 HV0.1 einzustellen, sind Auslagerungstemperaturen zwischen 450 und 550 °C günstig. Dagegen kann durch eine Wärmebehandlung bei Auslagerungstemperaturen von mindestens 620 °C eine Duktilität, die einer plastischen Arbeit von mindestens 0,72 $\mu$J entspricht, und damit eine größere Duktilität als im unbehandelten Gusszustand erzielt werden. Die Härte beträgt dann mindestens 530 HV0.1.

Die erfindungsgemäße Kupfer-Aluminium-Mangan-Legierung ist warmumgeformt. Die Matrix der Legierung weist im typischen Temperaturbereich der Warmumformung teilweise oder vollständig ein kubisch-raumzentriertes $\beta$-Gefüge auf, so dass sich die Legierung, beispielsweise durch Schmieden, gut warmformen lässt. Die Warmumformung findet bevorzugt bei mindestens 610 °C und höchstens bei 850 °C, besonders bevorzugt bei mindestens 700 °C und höchstens bei 750 °C statt. Durch die Warmumformung wird das Gefüge homogenisiert und die mechanischen Eigenschaften der Legierung werden verbessert. Insbesondere kann ein günstiges Verhältnis von Härte und Duktilität erzielt werden: Selbst bei einer Härte von mehr als 600 HV0.1 weisen die erfindungsgemäßen Legierungen im warmumgeformten Zustand eine höhere Duktilität als das metallische Glas Vitreloy 101 auf. Die Duktilität liegt dann in einem Bereich, der einer plastischen Arbeit von 0,58 bis 0,7 $\mu$J entspricht. Führt man die Warmumformung im Temperaturbereich zwischen 700 °C und 750 °C durch, erhält man einen Knetwerkstoff mit einer besonders hohen Duktilität, die einer plastischen Arbeit von mindestens 0,75 $\mu$J entspricht bei gleichzeitig einer Härte von mindestens 520 HV0.1. Wird die Warmumformung in dem oben genannten bevorzugten, beziehungsweise besonders bevorzugten Temperaturbereich durchgeführt, dann wird die im Folgenden beschriebene Phasenbeschaffenheit der Legierung besonders zuverlässig eingestellt.

Die erfindungsgemäße Kupfer-Aluminium-Mangan-Legierung weist nach der Warmumformung ein Gefüge auf, das bei Raumtemperatur aus einer $\beta$-Phase-Matrix besteht, in der Ausscheidungen von $\gamma$-Phase eingelagert sind. Die $\beta$-Phase-Matrix weist ein kubisches Gitter auf und ist für die Warmumformbarkeit des Werkstoffs ursächlich. Je nach genauer Zusammensetzung der Legierung kann die $\beta$-Phase-Matrix homogen aufgebaut sein oder aus zwei $\beta$-Phasen mit unterschiedlicher kubischer Struktur und unterschiedlichem Mangangehalt ausgebildet sein. Die Ausscheidungen von $\gamma$-Phase weisen ebenfalls ein kubisches Gitter auf und sind aufgrund der starken intermetallischen Bindung härter als die Matrix. Sie verleihen damit dem Werkstoff eine herausragende Verschleißbeständigkeit.

Insbesondere können bei einer erfindungsgemäßen Legierung erste Ausscheidungen von $\gamma$-Phase eine längliche, nadelartige Gestalt mit einer Längserstreckung von 10 bis 100 $\mu$m aufweisen. Die Breite dieser nadelartigen Ausscheidungen beträgt zwischen 2 und 6 $\mu$m. Das Verhältnis Längserstreckung zu Breite liegt für diese Ausscheidungen typischerweise zwischen 5 und 20.

Bei einer besonders vorteilhaften Ausführungsform der erfindungsgemäßen Legierung können in der $\beta$-Phase-Matrix zusätzlich zu den ersten Ausscheidungen mit länglicher Gestalt ferner zweite Ausscheidungen von $\gamma$-Phase eingelagert sein. Die zweiten Ausscheidungen weisen eine globulare Gestalt mit einer Größe von 4 bis 15 $\mu$m auf. Als Maß für die Größe der Ausscheidungen mit globularer Gestalt soll hierbei der volumengleiche Durchmesser eines Ausscheidungspartikels verstanden werden. Bei Ausscheidungspartikeln mit globularer Gestalt ist das Verhältnis Länge zu Breite des Partikels kleiner als 1,5. Ein solcher Partikel hat also eine Gestalt, die in keiner Richtung eine besonders ausgeprägte Erstreckung aufweist. Die Partikel können beispielsweise eine kugelähnliche Gestalt oder eine Gestalt ähnlich eines Würfels mit abgerundeten Kanten aufweisen. Die zweiten Ausscheidungen von γ-Phase unterscheiden sich von den ersten Ausscheidungen von γ-Phase vorwiegend hinsichtlich ihrer Gestalt. Ferner ist die Größe der globularen zweiten Ausscheidungen geringer als die mittlere Längserstreckung der ersten Ausscheidungen.

Bei einer weiteren besonders vorteilhaften Ausführungsform der erfindungsgemäßen Legierung können in der β-Phase-Matrix ferner dritte Ausscheidungen von γ-Phase eingelagert sein. Die dritten Ausscheidungen weisen eine globulare Gestalt mit einer Größe von 25 bis 420 nm auf. Als Maß für die Größe der Ausscheidungen mit globularer Gestalt soll hier der volumengleiche Durchmesser eines Ausscheidungspartikels verstanden werden. Typischerweise beträgt die mittlere Partikelgröße der dritten Ausscheidungen ungefähr 150 nm. Die dritten Ausscheidungen von γ-Phase unterscheiden sich von den zweiten Ausscheidungen von γ-Phase also hinsichtlich ihrer Größe. Sie sind wesentlich kleiner als die zweiten Ausscheidungen von γ-Phase. Die Legierung ist somit bezüglich der Ausscheidungen hierarchisch, das heißt auf unterschiedlichen Größenskalen mikrostrukturiert. Vermutlich sind die dritten Ausscheidungen verantwortlich für die besonders große Festigkeit der Legierung. Die dritten Ausscheidungen können insbesondere bei warmumgeformten Proben beobachtet werden, wenn die Temperatur bei der Warmumformung mindestens 700 °C betragen hat.

Ein weiterer Aspekt der Erfindung schließt die Verwendung einer erfindungsgemäßen Kupfer-Aluminium-Mangan-Legierung für Gleitlager, Führungsschienen oder Führungsrollen ein. Hierzu zählen beispielsweise Lagerbuchsen, Axiallager, Synchronringe und Gleitschuhe. Die Bauteile können sowohl als Massiv- als auch als Verbundwerkstoff ausgeführt sein. Die hervorragende Eignung einer erfindungsgemäßen Legierung für Bauteile, die auf Reibung beansprucht sind, zeigt sich in tribologischen Tests. Bei einem standardisierten Dauerlauftest in einem Ringsegment-Scheibe-Tribometer mit einem Gegenkörper aus Stahl 100Cr6, gehärtet mit 630 HV30 und mit geschliffener Kontaktfläche, weist ein Probenkörper aus einer erfindungsgemäßen Legierung nach 6 Stunden Versuchszeit bei 120 °C praktisch keinen messbaren Verschleiß auf. Dies bedeutet, dass der Materialabtrag im Versuch kleiner als 1 $\mu$m ist. Damit ist die erfindungsgemäße Legierung verschleißfester als bekannte Gleitlagerlegierungen auf Kupferbasis. Da die erfindungsgemäßen Legierungen ferner eine relativ geringe Dichte aufweisen, ermöglichen sie die Konstruktion von sehr leichten Bauteilen. Derartige Bauteile können signifikant leichter als Stahl-Bauteile ähnlicher Festigkeit und ähnlichen Metallpreises sein.

Ein weiterer Aspekt der Erfindung schließt die Verwendung einer erfindungsgemäßen Kupfer-Aluminium-Mangan-Legierung für Werkzeuge ein. Insbesondere eignet sich die Legierung für Werkzeuge, die einer hohen Verschleißbelastung bei erhöhter Temperatur ausgesetzt sind. Beispiele hierfür sind Umformwerkzeuge, wie sie in Form von Matrizen beim Strangpressen von Leichtmetallen oder in Form von Ziehwerkzeugen bei der Herstellung von Rohren oder Stangen verwendet werden. Die hohe Verschleißbeständigkeit der erfindungsgemäßen Legierung ist hier von besonderem Vorteil.

Ein weiterer Aspekt der Erfindung schließt die Verwendung einer erfindungsgemäßen Kupfer-Aluminium-Mangan-Legierung für Federn oder Federelemente ein. Die hierfür wichtige Kenngröße der Legierung ist die maximal speicherbare elastische Energie (Resilienz). Die Resilienz kann aus der Stauchgrenze und dem Elastizitätsmodul des Werkstoffs berechnet werden. Bei Werkstoffen aus einer erfindungsgemäßen Legierung beträgt die Resilienz mehr als 5 MPa. Bei der Konstruktion eines Federelements ist das Gewicht des Konstruktionsteils von Bedeutung. Folglich ist die Werkstoffkenngröße

$$\text{spezifische Resilienz} = \text{Resilienz} / \text{Dichte}$$

eine wichtige Größe. Aufgrund der hohen Resilienz und der geringen Dichte der erfindungsgemäßen Legierungen beträgt die spezifische Resilienz dieser Legierungen mehr als 0,8 MPa cm$^3$/g und liegt damit auf dem Niveau der spezifischen Resilienz von Federstahl.

Ein weiterer Aspekt der Erfindung schließt die Verwendung einer erfindungsgemäßen Kupfer-Aluminium-Mangan-Legierung für Zahnräder, Schneckenräder oder Getriebeelemente ein. Als vorteilhafte Eigenschaften der erfindungsgemäßen Legierung kommen hier ihre hohe Verschleißbeständigkeit und ihre Temperaturbeständigkeit zur Geltung. Die Legierungen sind bis 550 °C einsetzbar.

Ein weiterer Aspekt der Erfindung betrifft ein Verfahren gemäß Anspruch 11. Das Verfahren betrifft die Herstellung eines Werkstoffs aus einer erfindungsgemäßen Kupfer-Aluminium-Mangan-Legierung. Bei dem Herstellungsverfahren wird die Legierung nach dem Gießen warmumgeformt. Nach der Warmumformung weist die Legierung ein Gefüge auf, das aus einer β-Phase-Matrix besteht, in der Ausscheidungen von γ-Phase eingelagert sind.

Bevorzugt erfolgt die Warmumformung bei einer Temperatur von mindestens 610 °C und höchstens 850 °C. Wird die Warmumformung in diesem Temperaturbereich durchgeführt, wird die Phasenbeschaffenheit der Legierung besonders zuverlässig eingestellt.

Die Erfindung wird anhand der Ausführungsbeispiele sowie anhand der Figuren näher erläutert.

Es zeigen:

Fig. 1 ein Diagramm, in dem die mechanischen Eigenschaften von CuAl22Mn21 denen des metallischen Glases Vitreloy gegenüber gestellt sind,

Fig. 2 das Gefüge einer erfindungsgemäßen Legierung nach einer Warmumformung bei 750 °C,

Fig. 3 einen stark vergrößerten Ausschnitt des Gefüges einer erfindungsgemäßen Legierung nach einer Warmumformung bei 750 °C.

Einander entsprechende Teile sind in allen Figuren mit denselben Bezugszeichen versehen.

Eine erfindungsgemäße Legierung mit der Zusammensetzung 22 Gew.-% Al, 21 Gew.-% Mn, Rest Cu (CuAl22Mn21) sowie unvermeidbaren Verunreinigungen wurde in einem Tammanofen erschmolzen. Gussproben der Legierung wurden mittels Kokillenguss mit Luftabkühlung hergestellt. Die Legierung war problemlos gießbar. Ein Teil der Proben wurde anschließend für eine Stunde einer Wärmebehandlung bei Auslagerungstemperaturen zwischen 200 und 700 °C unterzogen. Ein anderer Teil der Proben wurde bei unterschiedlichen Temperaturen zwischen 300 und 800 °C warmumgeformt. Die mechanischen Eigenschaften der jeweiligen Proben wurden mittels registrierender Härteprüfung (Martens-Härte) ermittelt. Das Gefüge wurde metallographisch mittels Licht- und Elektronenmikroskopie charakterisiert. Als Vergleichswerkstoff dient das kupferbasierte metallische Glas Vitreloy 101 ($Cu_{47}Ti_{34}Zr_{11}Ni_8$).

Bei Raumtemperatur weist die Legierung CuAl22Mn21 ein zweiphasiges Gefüge auf: Die Matrix besteht aus einer kubischen β-Phase, die neben Kupfer mehr Mangan als Aluminium enthält. In die Matrix sind Ausscheidungen von γ-Phase eingelagert. Die γ-Phase besitzt eine kubische Struktur, sie weist jedoch hinsichtlich Gitterkonstante und stöchiometrischer Zusammensetzung (typisch $Al_4Cu_9$) einen anderen Aufbau als die β-Phase auf. Bei 800 °C liegt die Legierungen vermutlich als reine β-Legierungen mit kubisch-raumzentrierter Struktur vor.

Die Legierung CuAl22Mn21 zeichnet sich durch eine besonders hohe Festigkeit bei geringer Dichte (ungefähr 6100 $Kg/m^3$ im Gusszustand, einschließlich Porosität) aus. Im Gusszustand beträgt ihre Härte ungefähr 610 HV0,1, was einer Druckfestigkeit von über 2000 MPa entspricht.

Bekannte kommerzielle metallische Werkstoffe mit vergleichbarer Festigkeit sind entweder schwerer als die Legierung CuAl22Mn21 (beispielsweise hochfeste Stähle) oder erheblich teurer im Metallwert (beispielsweise metallische Gläser oder Titanlegierungen). Darüber hinaus enthält CuAl22Mn21 keine gesundheitsgefährdenden Elemente wie beispielsweise Beryllium.

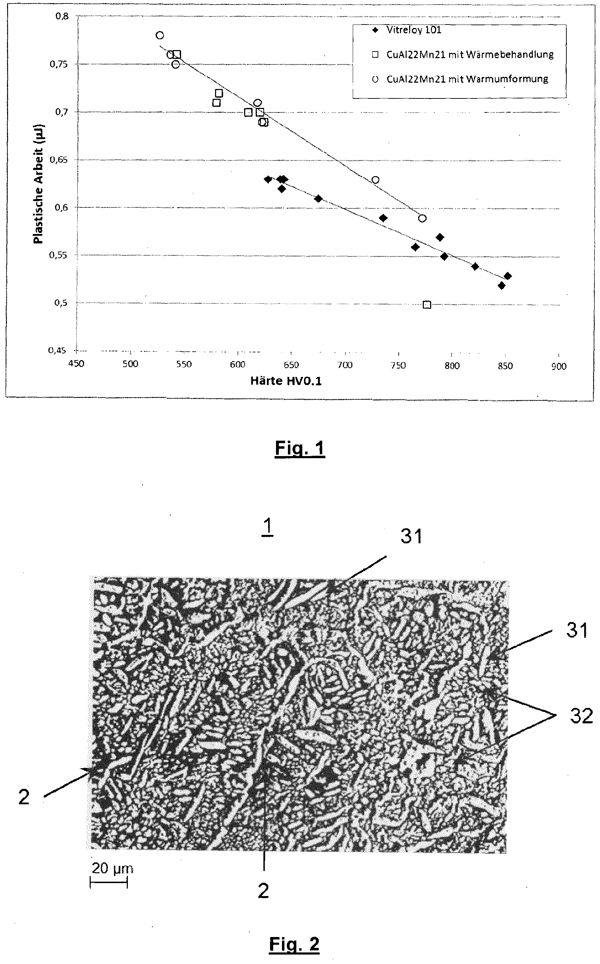

Fig. 1 zeigt die Bandbreite der durch Wärmebehandlung beziehungsweise Warmumformung erzielbaren Eigenschaften der erfinderischen Legierung CuAl22Mn21 im Vergleich zu kupferbasiertem metallischen Glas Vitreloy 101. Im Diagramm ist die bei einer Prüfkraft von 1000 mN ermittelte plastische Arbeit gegen die Härte HVO,1 des Werkstoffs aufgetragen. Die plastische Arbeit ist ein Maß für die Duktilität des Werkstoffs. Die drei Datenreihen beziehen sich auf CuAl22Mn21 mit Wärmebehandlung, CuAl22Mn21 mit Warmumformung und Vitreloy 101. Zur besseren Übersicht wurde an die beiden Datenreihen "CuAl22Mn21 mit Warmumformung" und "Vitreloy 101" jeweils eine Trendlinie angepasst.

Der Gusszustand der Legierung wird im Diagramm der Fig. 1 durch einen Datenpunkt mit einer Härte von 610 HV0,1 und einer plastischen Arbeit von 0,7 μJ repräsentiert. Das metallische Glas Vitreloy 101 hat in diesem Härtebereich eine Duktilität, die einer plastischen Arbeit von ungefähr 0,63 μJ entspricht.

Durch eine Wärmebehandlung kann die Härte der Legierung CuAl22Mn21 auf bis zu 780 HV0,1 angehoben werden. Auslagerungstemperaturen zwischen 450 und 550 °C erweisen sich hierbei als günstig. Wie der Fig. 1 zu entnehmen ist, geht mit der Zunahme der Härte eine Abnahme der Duktilität einher. Dagegen kann durch eine Wärmebehandlung bei Auslagerungstemperaturen von mindestens 620 °C eine größere Duktilität als im unbehandelten Gusszustand erzielt werden. Die Härte verringert sich dabei auf ungefähr 550 HV0,1.

An den warmumgeformten Proben wurden Härtewerte zwischen 530 HV0,1 und 770 HV0,1 ermittelt. Die größte Härte wurde dabei durch eine Warmumformung bei 500 °C erzielt. Die höchste Duktilität wurde bei Umformtemperaturen im Bereich 700 bis 750 °C erreicht. Dagegen verringert sich die Duktilität wieder signifikant, wenn die Warmumformung bei 800 °C durchgeführt wird. Auch für die warmumgeformten Werkstoffe gilt, dass die Duktilität umso geringer ist, je größer die Härte ist. Besonders hervorzuheben ist, dass die bei 500 °C und 800 °C umgeformten Proben mit 770 HV0,1 beziehungsweise 730 HV0,1 einerseits besonders hohe Härtewerte aufweisen, andererseits ihre Duktilität aber auch in diesem Härtebereich immer noch größer ist als die Duktilität des metallischen Glases Vitreloy 101, wie aus Fig. 1 zu erkennen ist. Erfindungsgemäße Legierungen weisen also im warmumgeformten Zustand in einem großen Härtebereich eine größere Duktilität als metallisches Glas gleicher Härte auf.

Fig. 2 zeigt das Gefüge 1 einer erfindungsgemäßen Legierung nach einer Warmumformung bei 750 °C. Zu erkennen sind längliche erste Ausscheidungen 31 von γ-Phase und globulare zweite Ausscheidungen 32 von γ-Phase, die in einer Matrix 2 von β-Phase eingelagert sind. Bei dieser Vergrößerung sind globulare dritte Ausscheidungen 33 aufgrund ihrer geringen Größe nicht zu erkennen.

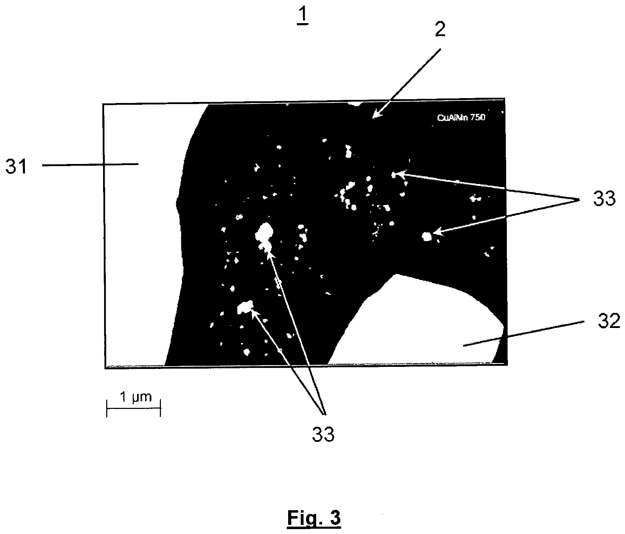

Fig. 3 zeigt einen stark vergrößerten Ausschnitt des Gefüges 1 einer erfindungsgemäßen Legierung nach einer Warmumformung bei 750 °C. Bei dieser Vergrößerung sind globulare dritte Ausscheidungen 33 von γ-Phase als helle Partikel sichtbar, die in der β-Phase-Matrix 2 eingelagert sind. Der Größenunterschied zwischen den dritten Ausscheidungen 33 und den ersten 31 beziehungsweise zweiten 32 Ausscheidungen von γ-Phase wird in dieser Darstellung deutlich.

Bezugszeichenliste

1   Gefüge
2   Matrix
31   erste Ausscheidungen
32   zweite Ausscheidungen
33   dritte Ausscheidungen

**Patentansprüche**

1. Kupfer-Aluminium-Mangan-Legierung mit folgender Zusammensetzung [in Gewichts-%]:

   Al:       17 bis 25 %
   Mn:       17 bis 25 %

   Rest Kupfer sowie unvermeidbare Verunreinigungen, wobei die Summe aus dem Aluminiumanteil und dem Mangananteil mindestens 40,5 Gew.-% beträgt, und wobei die Legierung warmumgeformt ist, **dadurch gekennzeichnet, dass** die Legierung nach der Warmumformung ein Gefüge (1) aufweist, das aus einer β-Phase-Matrix (2) besteht, in der Ausscheidungen (31, 32, 33) von γ-Phase eingelagert sind.

2. Kupfer-Aluminium-Mangan-Legierung gemäß Anspruch 1, **dadurch gekennzeichnet, dass** sie bei Raumtemperatur eine aus Druckversuchen ermittelte Stauchgrenze $R_{p0.2}$ von mehr als 1300 MPa aufweist.

3. Kupfer-Aluminium-Mangan-Legierung gemäß Anspruch 1 oder 2, **dadurch gekennzeichnet, dass** sie eine Härte von 500 bis 800 HV0.1 aufweist.

4. Kupfer-Aluminium-Mangan-Legierung gemäß einem der Ansprüche 1 bis 3, **dadurch gekennzeichnet, dass** erste Ausscheidungen (31) von γ-Phase eine längliche Gestalt mit einer Längserstreckung von 10 bis 100 μm aufweisen.

5. Kupfer-Aluminium-Mangan-Legierung gemäß Anspruch 4, **dadurch gekennzeichnet, dass** in der β-Phase-Matrix (2) ferner zweite Ausscheidungen (32) von γ-Phase eingelagert sind, die eine globulare Gestalt mit einer Größe von 4 bis 15 μm aufweisen.

6. Kupfer-Aluminium-Mangan-Legierung gemäß Anspruch 4 oder 5, **dadurch gekennzeichnet, dass** in der β-Phase-Matrix (2) ferner dritte Ausscheidungen (33) von γ-Phase eingelagert sind, die eine globulare Gestalt mit einer Größe von 25 bis 420 nm aufweisen.

7. Verwendung einer Kupfer-Aluminium-Mangan-Legierung gemäß einem der Ansprüche 1 bis 6 für Gleitlager, Führungsschienen oder Führungsrollen.

8. Verwendung einer Kupfer-Aluminium-Mangan-Legierung gemäß einem der Ansprüche 1 bis 6 für Werkzeuge.

9. Verwendung einer Kupfer-Aluminium-Mangan-Legierung gemäß einem der Ansprüche 1 bis 6 für Federn oder Federelemente.

10. Verwendung einer Kupfer-Aluminium-Mangan-Legierung gemäß einem der Ansprüche 1 bis 6 für Zahnräder, Schneckenräder oder Getriebeelemente.

11. Verfahren zur Herstellung eines Werkstoffs aus einer Kupfer-Aluminium-Mangan-Legierung gemäß einem der Ansprüche 1 bis 6, wobei die Legierung nach dem Gießen warmumgeformt wird.

**12.** Verfahren gemäß Anspruch 11, **dadurch gekennzeichnet, dass** die Warmumformung bei einer Temperatur von mindestens 610 °C und höchstens 850 °C erfolgt.

**Claims**

**1.** Copper/aluminium/manganese alloy having the following composition [in % by weight]:

Al: 17 to 25%
Mn: 17 to 25%
balance copper and inevitable impurities, wherein the sum of the aluminium portion and the manganese portion is at least 40.5% by weight, and wherein the alloy is hot-formed,
**characterised in that** the alloy after the hot-forming has a structure (1) which comprises a $\beta$-phase matrix (2) in which precipitations (31, 32, 33) of $\gamma$-phase are incorporated.

**2.** Copper/aluminium/manganese alloy according to claim 1, **characterised in that**, at ambient temperature, it has a compression yield point $R_{P0.2}$ established from pressure tests of more than 1300 MPa.

**3.** Copper/aluminium/manganese alloy according to claim 1 or claim 2, **characterised in that** it has a hardness of from 500 to 800 HV0.1.

**4.** Copper/aluminium/manganese alloy according to any one of claims 1 to 3, **characterised in that** first precipitations (31) of $\gamma$-phase have an elongate structure with a longitudinal extent of from 10 to 100 $\mu$m.

**5.** Copper/aluminium/manganese alloy according to claim 4, **characterised in that** in the $\beta$-phase matrix (2) second precipitations (32) of $\gamma$-phase are further incorporated and have a globular shape with a size of from 4 to 15 $\mu$m.

**6.** Copper/aluminium/manganese alloy according to claim 4 or claim 5, **characterised in that** in the $\beta$-phase matrix (2) third precipitations (33) of $\gamma$-phase are further incorporated and have a globular shape with a size of from 25 to 420 nm.

**7.** Use of a copper/aluminium/manganese alloy according to any one of claims 1 to 6 for plain bearings, guide rails or guide rollers.

**8.** Use of a copper/aluminium/manganese alloy according to any one of claims 1 to 6 for tools.

**9.** Use of a copper/aluminium/manganese alloy according to any one of claims 1 to 6 for springs or resilient elements.

**10.** Use of a copper/aluminium/manganese alloy according to any one of claims 1 to 6 for toothed wheels, worm wheels or gear elements.

**11.** Method for producing a material from a copper/aluminium/manganese alloy according to any one of claims 1 to 6, wherein the alloy is hot-formed after casting.

**12.** Method according to claim 11, **characterised in that** the hot-forming is carried out at a temperature of at least 610°C and a maximum of 850°C.

**Revendications**

**1.** Alliage cuivre-aluminium-manganèse ayant la composition suivante [en % en poids] :

Al : 17 à 25 %
Mn : 17 à 25 %
le reste étant du cuivre ainsi que des impuretés inévitables, où la somme de la fraction d'aluminium et de la fraction de manganèse est d'au moins 40,5 % en poids, et où l'alliage est formé à chaud,

**caractérisé en ce que** l'alliage présente après le formage à chaud une structure (1) qui consiste en une matrice de phase β (2) dans laquelle des dépôts (31, 32, 33) de phase γ sont inclus.

2. Alliage cuivre-aluminium-manganèse selon la revendication 1, **caractérisé en ce qu'**il présente à la température ambiante une limite de refoulement $R_{p0,2}$ déterminée d'après des essais de compression de plus de 1300 MPa.

3. Alliage cuivre-aluminium-manganèse selon la revendication 1 ou 2, **caractérisé en ce qu'**il présente une dureté de 500 à 800 HV0,1.

4. Alliage cuivre-aluminium-manganèse selon l'une des revendications 1 à 3, **caractérisé en ce que** des premiers dépôts (31) de phase γ présentent une forme allongée avec une étendue en longueur de 10 à 100 μm.

5. Alliage cuivre-aluminium-manganèse selon la revendication 4, **caractérisé en ce que** des seconds dépôts (32) de phase y, qui présentent une forme globulaire avec une taille de 4 à 15 μm, sont inclus en outre dans la matrice de phase β (2).

6. Alliage cuivre-aluminium-manganèse selon la revendication 4 ou 5, **caractérisé en ce que** des troisièmes dépôts (33) de phase y, qui présentent une forme globulaire avec une taille de 25 à 420 nm, sont inclus en outre dans la matrice de phase β (2).

7. Utilisation d'un alliage cuivre-aluminium-manganèse selon l'une des revendications 1 à 6 pour des paliers à glissement, des rails de guidage ou des galets de guidage.

8. Utilisation d'un alliage cuivre-aluminium-manganèse selon l'une des revendications 1 à 6 pour des outils.

9. Utilisation d'un alliage cuivre-aluminium-manganèse selon l'une des revendications 1 à 6 pour des ressorts ou des éléments de ressorts.

10. Utilisation d'un alliage cuivre-aluminium-manganèse selon l'une des revendications 1 à 6 pour des roues dentées, des roues hélicoïdales ou des éléments d'engrenage.

11. Procédé pour la fabrication d'un matériau en un alliage cuivre-aluminium-manganèse selon l'une des revendications 1 à 6, où l'alliage est formé à chaud après la coulée.

12. Procédé selon la revendication 11, **caractérisé en ce que** le formage à chaud a lieu à une température d'au moins 610°C et d'au plus 850°C.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 05009626 A
- DE 102005035709 A1

- JP 07062472 A

**In der Beschreibung aufgeführte Nicht-Patentliteratur**

- **WACHTEL E. et al.** Magnetothermal Investigations of Cu-Al-Mn-Alloys (Field of the Heusler-Phase). *Journal of Magnetism and Magnetic Materials,* 01. Januar 1977, vol. 4 (1-4), 292-301

- **KOGA et al.** Anomalous Electrical Resistivity and Nuclear Magnetic Resonance in Rapidly Quenched Cu-Mn-Al-Ribbons. *IEEE Transactions on Magnetics,* 05. September 1987, vol. 23 (5), 3089-3091